# EUROPÄISCHE PATENTSCHRIFT

(11) **EP 2 284 576 B1**
(45) Veröffentlichungstag und Bekanntmachung des Hinweises auf die Patenterteilung: **10.07.2013**
(21) Anmeldenummer: 09009918.5
(22) Anmeldetag: 31.07.2009
(51) Int. Cl.: G01V 1/00

(54) **Verfahren und System zur Vorhersage von Ereignissen**
Method and system for predicting events
Procédé et système de prévision d'événements

(43) Veröffentlichungstag der Anmeldung: 16.02.2011
(73) Patentinhaber: Deutsche Telekom AG, 53113 Bonn (DE)
(72) Erfinder: Roshandel, Mehran, 13591 Berlin (DE)
(74) Vertreter: Blumbach Zinngrebe

(56) Entgegenhaltungen:
- WO-A-01/74240
- WO-A-2009/004804
- WO-A-2009/016595
- FERENTINOU ET AL: "Computational intelligence tools for the prediction of slope performance" COMPUTERS AND GEOTECHNICS, ELSEVIER, Bd. 34, Nr. 5, 1. September 2007 (2007-09-01), Seiten 362-384, XP022285256 ISSN: 0266-352X
- KIRSCHVINK, J.L.: "Earthquake Prediction by Animals: Evolution and Sensory Perception" BULLETIN OF THE SEISMOLOGICAL SOCIETY OF AMERICA, Bd. 90, Nr. 2, April 2000 (2000-04), Seiten 312-323, XP002563925

## Beschreibung

Die Erfindung betrifft ein Verfahren und ein System zur Vorhersage von Ereignissen, insbesondere von Naturereignissen wie Erdbeben.

Eine der größten Naturgefahren in unserer dicht besiedelten Welt ist die Gefahr eines Erdbebens, die bis heute nicht vorhersagbar ist und eine große Bedrohung für Menschen, Wirtschaft und Umwelt darstellt. Da eine Erdbebenkatastrophe nicht verhindert werden kann, sind Vorhersagen von großer Bedeutung.

Aus DE 37 36 873 A1 ist bekannt, dass bestimmte Tiere die Fähigkeit haben, manche Naturkatastrophen vor deren Eintritt wahrzunehmen. Unter anderem sind sie fähig, Vorzeichen eines Erdbebens wahrzunehmen. Es ist jedoch derzeit nicht bekannt, wodurch die Tiere in der Lage sind, Gefahren wie Erdbeben vorzeitig zu registrieren.

Durch einfache menschliche Beobachtung des Verhaltens der Tiere ist es nicht möglich, derartige Anomalien festzustellen, da sich Tiere aus unterschiedlichen Gründen aufregen können, was nicht zwangsläufig auf eine bevorstehende Naturkatastrophe hindeuten muss. Zudem ist die Beobachtung der Tiere und deren Verhalten durch Beobachter in der Regel subjektiv beeinflusst.

Zu dieser Erkenntnis gelangt auch die DE 37 36 873 A1 und schlägt daher eine Anordnung zur kurzfristigen Vorhersage von Erdbeben durch Feststellung und Messung seismischer Bodenschwingungen mittels auf hochfrequente Schwingungen im Bereich über etwa 20000 Hz ansprechender Ultraschallsensoren vor. Die DE 37 36 873 A1 geht dabei von der Annahme aus, dass die Ursache für das veränderte Verhalten der Tiere vor Erdbeben Ultraschallschwingungen sind, die vom Bebengebiet ausgehen.

Dementsprechend berücksichtigt die in DE 37 36 873 A1 beschriebene Anordnung in nachteiliger Weise mögliche andere Messgrößen nicht, die auch ursächlich für ein in Verbindung mit einem Erdbeben auftretendes verändertes Tierverhalten sein könnten.

Aus WO 2009/004804 A1 ist eine Vorrichtung und ein Verfahren zur Erdbebenvorhersage durch Messen der Schwanzbewegung eines Tieres bekannt, wobei ein Erdbeben vorhergesagt wird, wenn die Schwanzbewegung einen aus vorherigen Beobachtungen ermittelten Schwellwert erreicht.

In WO 01/74240 A2 wird ein Verfahren und eine Vorrichtung zur objektiven Messung von Schmerz, Schmerzbehandlung und anderen verwandten Techniken beschrieben, wobei zu diesem Zweck die Gehirnaktivität bei Menschen oder Tieren gemessen, bestimmten Hirnregionen zugeordnet und die Signale unterschiedlicher Hirnregionen korreliert werden.

Der vorliegenden Erfindung liegt die Aufgabe zugrunde, einen alternativen Weg zur Vorhersage von Ereignissen, insbesondere von Naturereignissen wie Erdbeben, aufzuzeigen.

Diese Aufgabe wird durch ein Verfahren gemäß Anspruch 1 sowie durch ein System gemäß Anspruch 5 gelöst. Vorteilhafte Ausführungsformen und Weiterbildungen sind Gegenstand der jeweiligen Unteransprüche.

Das erfindungsgemäße Verfahren zur Vorhersage von Ereignissen basiert auf der Technik des maschinellen Lernens und umfasst eine erste und zweite Lernphase, sowie eine Vorhersagephase.

In der ersten Lernphase werden erste Eingabeparameter erfasst, welche erste Verhaltensparameter wenigstens eines Tieres umfassen. In Abhängigkeit der erfassten ersten Eingabeparameter wird für jedes Tier ein individuelles Verhaltensprofil erstellt und/oder angepasst, welches ein normales Verhalten des jeweiligen Tieres repräsentiert. Um auf die individuellen Verhaltensprofile zugreifen zu können, werden diese zweckmäßigerweise abrufbar in einem Speicher abgelegt.

In der zweiten Lernphase werden zweite Eingabeparameter erfasst, welche zweite Verhaltensparameter des wenigstens einen Tieres umfassen. In Abhängigkeit der erfassten zweiten Eingabeparameter und des zuvor erstellten individuellen Verhaltensprofils des entsprechenden Tieres wird ein anormales Verhaltensmuster erkannt, wenn die zweiten Eingabeparameter nicht dem individuellen Verhaltensprofil entsprechen. Ferner werden Informationen über wenigstens ein Ereignis erfasst, das zu dem anormalen Verhaltensmuster in zeitlichem Zusammenhang steht, wobei die Informationen den zeitlichen Abstand zwischen dem Erfassungszeitpunkt der zweiten Eingabeparameter und dem Zeitpunkt, zu dem das Ereignis eintritt, umfassen. Das erkannte anormale Verhaltensmuster wird mit den erfassten Informationen über Ereignisse verknüpft und für einen späteren werden entsprechende Verknüpfungsdaten abrufbar in einem Speicher abgelegt.

In der Vorhersagephase werden dritte Eingabeparameter erfasst, welche dritte Verhaltensparameter des wenigstens einen Tieres umfassen. In Abhängigkeit der erfassten dritten Eingabeparameter und des zuvor erstellten individuellen Verhaltensprofils des entsprechenden Tieres wird ein anormales Verhaltensmuster erkannt, wenn die dritten Eingabeparameter nicht dem individuellen Verhaltensprofil entsprechen. Aus den in der zweiten Lernphase erstellten Verknüpfungsdaten wird wenigstens ein mit dem erkannten anormalen Verhaltensmuster verknüpftes Ereignis ermittelt, und in Abhängigkeit des erfassten zeitlichen Abstands zwischen dem erkannten anormalen Verhaltensmuster und dem verknüpften Ereignis vorhergesagt.

Verhaltensparameter können alle mess- und/oder beobachtbaren tierspezifischen Daten sein, wie beispielsweise Gehirnwellenmuster, Pulsfrequenz, Atemfrequenz, Körpertemperatur, Hautwiderstand oder Zitterbewegungen des Tieres. Das Erfassen der Eingabeparameter umfasst vorteilhaft zusätzlich zum Erfassen von Verhaltensparametern das Erfassen von Umweltparametern, wie beispielsweise Lufttemperatur, Luftfeuchtigkeit, Luftdruck, Tageszeit, Jahreszeit, geographische Position, Bodenschwankungen oder Bodenbeschaffenheit.

Die ersten, zweiten und dritten Eingabeparameter umfassen typischerweise gleichartige Parametersätze, wobei die Parameterwerte die jeweiligen Körperzustände des Tieres bzw. die jeweiligen Umweltbedingungen zu unterschiedlichen Zeitpunkten widerspiegeln.

Die Eingabeparameter werden mittels Techniken des maschinellen Lernens verarbeitet, wobei zu diesem Zweck vorzugsweise die Schritte der ersten Lernphase und/oder die Schritte der zweiten Lernphase wiederholt ausgeführt werden, um eine Klassifizierung der Eingabeparameter zu ermöglichen. Die erste Lernphase, die zweite Lernphase und die Vorhersagephase können nacheinander oder auch parallel ablaufen.

Vorzugsweise wird zum maschinellen Lernen ein Entscheidungsbaum, ein künstliches neuronales Netz (KNN), eine Support Vector Machine (SVM), ein Bayes'sches Netz, ein naiver Bayes-Klassifikator, ein Random Forest, ein verstärkter Entscheidungsbaum, und/oder ein verstärkter naiver Bayes-Klassifikator eingesetzt. Beim verstärkten Entscheidungsbaum bzw. beim verstärkten naiven Bayes-Klassifikator kommt der Algorithmus des Boosting zum Einsatz, der mehrere schlechte Klassifikatoren zu einem einzigen guten Klassifikator verschmilzt. Das erfindungsgemäße Verfahren ist nicht auf die genannten Methoden beschränkt, sondern kann alternativ oder zusätzlich jede geeignete, auch zukünftige, Methode des maschinellen Lernens einsetzen.

Das maschinelle Lernen dient besonders vorteilhaft der Klassifizierung der Eingabeparameter. Bei Einsatz eines künstlichen neuronalen Netzes beispielsweise dienen die Lernphasen insbesondere dazu, das künstliche neuronale Netz derart anzupassen, dass aus multidimensionalen Eingabevektoren, welche die jeweiligen Eingabeparameter umfassen, durch das künstliche neuronale Netz zugehörige Ausgabevektoren erzeugt werden, wobei die Ausgabevektoren nur wenige Dimensionen aufweisen, so dass aus diesen auf einfache Weise eine Klassifizierung der jeweiligen Eingabeparameter bestimmbar ist. Ein Verhaltensprofil für normales Verhalten kann in diesem Ausführungsbeispiel durch einen Normal-Bereich definiert sein, in dem entsprechende Ausgabevektoren des künstlichen neuronalen Netzes liegen. Ein anormales Verhaltensmuster wird in diesem Fall dadurch erkannt, dass aus dem Eingabevektor mit den entsprechenden Eingabeparametern durch das künstliche neuronale Netz ein Ausgabevektor erzeugt wird, der außerhalb des Normal-Bereichs liegt.

Entscheidungsbäume sind eine spezielle Repräsentation von Entscheidungsregeln für aufeinanderfolgende, hierarchische Entscheidungen. Entscheidungsbäume trennen die Eingabeparameter in mehrere Gruppen, welche jeweils durch eine Regel mit mindestens einer Bedingung bestimmt werden. Um eine Klassifikation abzulesen, geht man entlang des Baumes abwärts. Vorteilhaft kann auch ein sogenanntes TBNN (Tree-Based Neural Network) eingesetzt werden, bei welchem die Regeln eines Entscheidungsbaumes in ein künstliches neuronales Netz übersetzt werden.

Bayes'sche Netze dienen der Repräsentation von nicht beobachtbaren Ereignissen und daraus möglichen Schlussfolgerungen. Sie stellen eine spezielle Form der Formulierung von wahrscheinlichkeitstheoretischen Modellen dar. Ein Bayes'sches Netz ist ein gerichteter azyklischer Graph (DAG), in dem die Knoten Zufallsvariablen und die Kanten bedingte Abhängigkeiten zwischen den Variablen beschreiben. Jedem Knoten des Netzes ist eine bedingte Wahrscheinlichkeitsverteilung der durch ihn repräsentierten Zufallsvariable gegeben, die Zufallsvariablen an den Elternknoten zuordnet. Sie werden durch Wahrscheinlichkeitstabellen beschrieben. Diese Verteilung kann beliebig sein, jedoch wird vorzugsweise mit diskreten Verteilungen oder Normalverteilungen gearbeitet. Eltern eines Knotens v sind diejenigen Knoten, von denen eine Kante zu v führt. Ein Bayes'sches Netz dient dazu, die gemeinsame Wahrscheinlichkeitsverteilung aller beteiligten Variablen unter Ausnutzung bekannter bedingter Unabhängigkeiten möglichst kompakt zu repräsentieren. Dabei wird die bedingte Abhängigkeit bzw. Unabhängigkeit von Untermengen der Variablen mit dem a-priori Wissen kombiniert.

Ein Bayes-Klassifikator ist ein aus dem Bayes-Theorem hergeleiteter Klassifikator, welcher jeden multidimensionalen Eingabevektor der Klasse zuordnet, zu der er mit der größten Wahrscheinlichkeit gehört. Genau genommen handelt es sich um eine mathematische Funktion, die jedem Punkt eines Merkmalsraums eine Klasse zuordnet.

Aufgrund seiner schnellen Berechenbarkeit bei guter Erkennungsrate kann vorteilhaft ein naiver Bayes-Klassifikator eingesetzt werden. Mittels des naiven Bayes-Klassifikators ist es möglich, die Zugehörigkeit eines Eingabevektors zu einer Klasse zu bestimmen, wobei ein naiver Bayes-Klassifikator auch als sternfömiges Bayes'sches Netz betrachtet werden kann. Grundannahme eines naiven Bayes-Klassifikators ist, dass jedes Attribut nur vom Klassenattribut abhängt. Obwohl dies in der Realität selten zutrifft, erzielen naive Bayes-Klassifikatoren häufig gute Ergebnisse, solange die Attribute nicht zu stark korreliert sind. Für den Fall starker Abhängigkeiten zwischen den Attributen ist eine Erweiterung des naiven Bayes-Klassifikators um einen Baum zwischen den Attributen sinnvoll. Das Ergebnis wird baumerweiterter naiver Bayes-Klassifikator genannt.

Eine Support Vector Machine (SVM) ist ein Klassifikator, der eine Menge von Eingabevektoren so in Klassen untereilt, dass um die Klassengrenzen herum ein möglichst breiter Bereich frei bleibt. Ein Random Forest ist ein Klassifikator, welcher aus mehreren verschiedenen, unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald eine Entscheidung treffen und die Klasse mit den meisten Stimmen entscheidet die endgültige Klassifikation.

Das eingesetzte maschinelle Lernen kann insbesondere überwachtes Lernen, unüberwachtes Lernen, bestärkendes Lernen oder eine Kombination davon umfassen. Software-Tools zur Implementierung des maschinellen Lernens umfassen beispielsweise GNU R, RapidMiner oder Shogun.

Mit besonderem Vorteil umfasst das Erfassen der ersten, zweiten und/oder dritten Eingabeparameter das Erfassen von Gehirnaktivitäten des wenigstens einen Tieres, da sich in diesen eine Reaktion des Tieres auf äußere Einflüsse in der Regel auch dann manifestiert, wenn andere Körperfunktionen wie Pulsfrequenz sich nicht signifikant ändern.

Ein erfindungsgemäßes System zur Vorhersage von Ereignissen, welches zur Ausführung des oben beschriebenen Verfahrens ausgebildet ist, umfasst wenigstens eine erste Messeinrichtung zur Messung von Verhaltensparametern eines der jeweiligen ersten Messeinrichtung zugeordneten Tieres, eine erste, mit der wenigstens einen ersten Messeinrichtung verbundenen Erfassungseinrichtung zum Erfassen von Eingabeparametern, wobei die Eingabeparameter gemessene Verhaltensparameter wenigstens eines Tieres umfassen, eine zweite Erfassungseinrichtung zum Erfassen von Informationen über Ereignisse, wobei die Informationen den zeitlichen Abstand zwischen dem Erfassungszeitpunkt erfasster Eingabeparameter und dem Zeitpunkt, zu dem das jeweilige Ereignis eintritt, umfassen, eine Verarbeitungseinrichtung, sowie einen ersten Speicher zum Speichern der individuellen Verhaltensprofile und einen zweiten Speicher zum Speichern von Verknüpfungsdaten, durch welche anormale Verhaltensmuster mit Informationen über Ereignisse verknüpft sind.

Die Verarbeitungseinrichtung ist dazu ausgebildet, aus erfassten Eingabeparametern und Informationen über Ereignisse mittels maschinellen Lernens in einer ersten Lernphase für jedes Tier ein individuelles Verhaltensprofil zu ermitteln, welches ein normales Verhalten des jeweiligen Tieres repräsentiert, in einer zweiten Lernphase anormale Verhaltensmuster zu erkennen und mit erfassten Informationen über Ereignisse zu verknüpfen, und in einer Vorhersagephase anormale Verhaltensmuster zu erkennen und damit verknüpfte Ereignisse vorherzusagen. Zu diesem Zweck umfasst die Verarbeitungseinrichtung vorzugsweise ein in einem Speicher hinterlegtes Programm, welches durch einen Mikroprozessor ausführbar ist.

Besonders vorteilhaft ist die wenigstens eine Messeinrichtung zum Aufnehmen eines EEG des der Messeinrichtung zugeordneten Tieres ausgebildet. Die Messeinrichtung kann dementsprechend vorzugsweise für eine Mehrzahl von Messpunkten kontinuierliche Spannungsmesswerte ermitteln und in einer entsprechenden Mehrzahl von Kanälen bereitstellen. Die Messeinrichtung ist vorzugsweise zur drahtlosen Kommunikation mit der ersten Erfassungseinrichtung ausgebildet, und insbesondere als mobile, am Kopf eines Tieres befestigbare Einrichtung ausgebildet.

Um in die Klassifizierung des Tierverhaltens auch Umweltbedingungen einzubeziehen, weist das System vorteilhaft ferner eine Einrichtung zum Ermitteln von Umweltparametern auf, welche mit der ersten Erfassungseinrichtung verbunden ist.

Ferner ist vorteilhaft eine Alarmeinrichtung vorgesehen, wobei die Verarbeitungseinrichtung dazu ausgebildet ist, bei Vorhersage eines vorbestimmten Ereignisses mittels der Alarmeinrichtung das Auslösen eines Alarms zu bewirken.

Vorzugsweise ist das vorbestimmte Ereignis ein Erdbeben, wobei mittels der Verknüpfungsdaten, die Informationen über den zeitlichen Abstand zwischen Erkennen des anormalen Verhalternsmusters und verknüpftem Ereignis umfassen, der Beginn des Erdbebens abgeschätzt werden kann, so dass ein erfindungsgemäßes System vorteilhaft als Erdbeben-Frühwarnsystem eingesetzt werden kann.

Die Erfindung betrifft somit besonders vorteilhaft ein Verfahren zur Vorhersage von Erdbeben durch Messung und Analyse der Gehirnaktivitäten von Tieren, wobei die Gehirnströme eines Tieres durch Methoden der künstlichen Intelligenz analysiert und profiliert werden, um mögliche Anomalien und deren Ursachen miteinander zu verbinden.

Hierbei werden neben der Aufzeichnung der Gehirnaktivitäten vorzugsweise auch geografische und geologische Faktoren, Jahreszeiten, Temperaturen sowie andere relevante Umweltparameter und Nachrichten mit protokolliert und bewertet. Aus der Summe aller Daten wird ein Profil gebildet, das als normales Verhalten zu Grunde gelegt wird.

Das System meldet vorzugsweise alle Gehirnaktivitäten, die außerhalb des normalen Verhaltens liegen. Werden diese Meldungen mit Erdbebenereignissen der Vergangenheit korreliert, kann ein spezifisches Verhalten der Tiere identifiziert werden, das mit möglichen Erdbeben in naher. Zukunft zusammenhängt.

Eine Kernidee der Erfindung besteht somit darin, Tiere als einen ganzheitlichen Sensor zu nutzen, indem deren Gehirnaktivität durch ein auf künstlicher Intelligenz (KI) basierendes System überwacht und typische Gehirnwellen, die im Vorfeld eines Erdbebens auftreten, identifiziert werden. Besonders vorteilhaft ermöglicht das erfindungsgemäße Verfahren, eine Gehirnaktivität zu extrahieren, die nur beim Wahrnehmen von Erdbebenvorzeichen auftritt.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: schematisch den Ablauf einer bevorzugten Aus- führungsform des erfindungsgemäßen Verfahrens,
- Fig. 2:: schematisch eine bevorzugte Ausführungsform eines erfindungsgemäßen Systems, und
- Fig. 3:: beispielhaft die Klassifizierung von Ausgabe- vektoren eines künstlichen neuronalen Netzes.

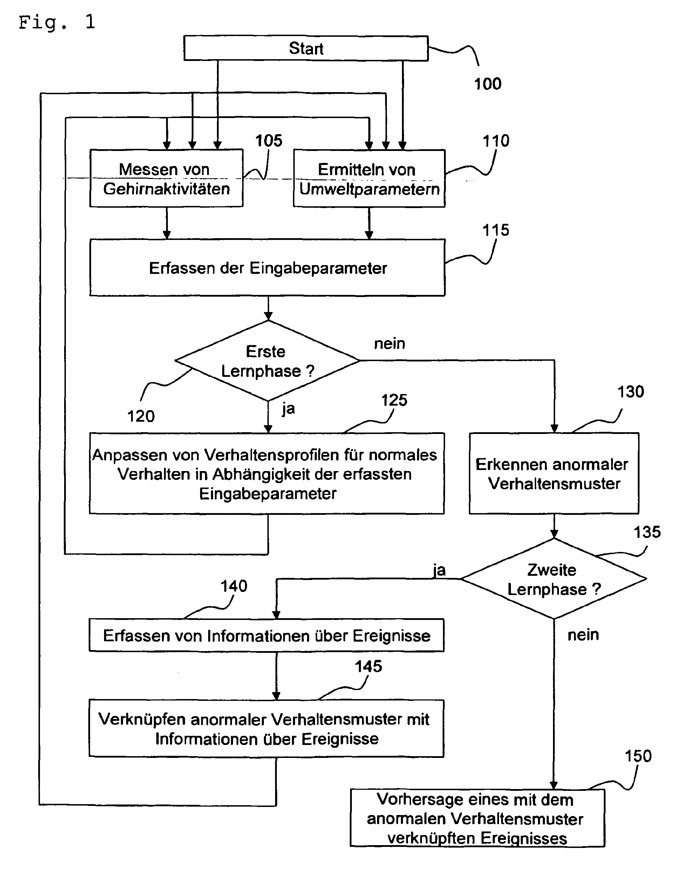

In Fig. 1 ist ein schematisches Ablaufdiagramm einer bevorzugten Ausführungsform des erfindungsgemäßen Verfahrens dargestellt. In der dargestellten Ausführungsform sieht das Verfahren vor, die Gehirnaktivitäten von einer Mehrzahl von Tieren individuell aufzuzeichnen, und diese individuell zu analysieren und zu bewerten. Darauf basierend wird das normale Verhalten der Tiere extrahiert und jegliche Anomalien erkannt. Die erkannten Anomalien werden jeweils mit Umweltereignissen assoziiert. Aus den so gewonnenen Erkenntnissen lassen sich unterschiedliche spezifische Verhaltenweisen der Tiere extrahieren, die zur Vorhersage von Umweltereignissen benutzt werden können.

Nachdem in Schritt 100 das System gestartet wurde, werden in Schritt 105 die Gehirnaktivitäten der Tiere gemessen. Zum Erfassen der Gehirnaktivität kann ein handelsübliches EEG-Gerät verwendet werden, wobei als Messeinrichtung vorzugsweise eine mobile drahtlose Kopfkomponente eingesetzt wird, damit die Tiere in ihrer Bewegungsfreiheit nicht eingeschränkt oder gequält werden. Da momentan keine Erkenntnisse vorliegen, mit welchem Sinnesorgan und in welchem Gehirnbereich die Erdbebensignale wahrgenommen werden, werden die Gehirnaktivitäten vorzugsweise möglichst umfassend erfasst.

Prinzipiell sind alle Tierarten für das erfindungsgemäße Verfahren geeignet. Nach derzeitiger Erfahrung sind unterirdisch lebende Tierarten besonders gut geeignet. Die Anzahl der Tiere sowie der Tierarten bestimmen die Qualität der Vorhersage. Dementsprechend sieht das Verfahren besonders vorteilhaft das Erfassen von Verhaltensparametern einer Vielzahl von Tieren unterschiedlicher Tierarten vor.

Parallel und vorzugsweise zeitgleich zum Messen der Gehirnaktivitäten werden in Schritt 110 ausgewählte Umweltparameter (Temperatur, Jahreszeit, Bodenschwankungen, Luftdruck, usw.) ermittelt. Die gemessenen Gehirnaktivitäten der einzelnen Tiere und die parallel ermittelten Umweltparameter werden in Schritt 115 als gemeinsame Eingabeparameter erfasst.

In der Lernphase werden automatisch Korrelationen zwischen den Eingabeparametern, insbesondere zwischen den Gehirnaktivitäten und den Umweltparametern ermittelt und so eine Klassifizierung der Gehirnaktivitäten ermöglicht.

In Schritt 120 wird geprüft, ob sich das Verfahren in der ersten Lernphase befindet. Ist dies der Fall, so werden in Schritt 125 für jedes Tier individuelle Verhaltensprofile in Abhängigkeit der erfassten Eingabeparameter erstellt und/oder angepasst. Diese Phase ist das wichtigste Glied in der Verfahrenskette. Die Erfolgsaussichten des Verfahrens sind maßgeblich abhängig von der Ergebnisqualität dieser Phase. In dieser Phase wird ein KI-Basiertes Verfahren eingesetzt, das mit Hilfe von maschinellem Lernen die erfassten Gehirnaktivitäten analysiert, kategorisiert und mit sonstigen Parametern (Umwelt, Sozial, ...) korreliert. Diese Ergebnisse werden individuell für jedes Tier gespeichert. So wird sichergestellt, dass sich das vom System gelernte Verhalten jeweils auf ein einzelnes Tier bezieht, da auch Tiere eine eigene Persönlichkeit haben, die bei der Analyse berücksichtigt werden muss.

Typischerweise erfolgt während der ersten Lernphase eine Vielzahl von Durchläufen der Schritte 105 bis 125, um die Qualität der auf diese Weise erhaltenen Verhaltensprofile, die das normale Verhalten der Tiere repräsentieren, zu erhöhen.

Nachdem das System das individuelle normale Verhalten der Tiere gelernt hat, ist es nach Abschluss der ersten Lernphase in der Lage, in Schritt 130 anormales Verhalten zu registrieren. Da nicht jede Anomalie zwangsläufig eine Katastrophe bedeutet, sondern ganz natürliche Quellen haben kann (z.B. Feind in der Nähe, Futter in der Nähe, ...), werden die erfassten Anomalien in einer zweiten Lernphase mit aktuellen Umweltereignissen und Umweltparametern (z.B. Wetterparameter) assoziiert. Dementsprechend wird in Schritt 135 geprüft, ob sich das Verfahren in der zweiten Lernphase befindet. Ist dies der Fall, so werden in Schritt 140 Informationen über Ereignisse erfasst und in Schritt 145 mit erkannten anormalen Verhaltensmustern verknüpft.

Hierdurch ergibt sich nach Abschluss der zweiten Lernphase eine Verhaltensdatenbank, in der jede Anomalie mit einem bestimmten Ereignis assoziiert ist, so dass in Schritt 150 ein mit einem erkannten anormalen Verhaltensmuster verknüpftes Ereignis vorhergesagt werden kann. Bestimmte Bedingungen oder Situationen wie beispielsweise, dass sich in der Nähe des jeweils überwachten Tieres ein Beutetier, ein Artgenosse oder ein Feind aufhält oder dem Tier Futter bereitgestellt wird, können wahlweise als Umweltparameter in Schritt 110 oder als Ereignisse in Schritt 140 erfasst und dementsprechend in der ersten oder zweiten Lernphase Berücksichtigung finden.

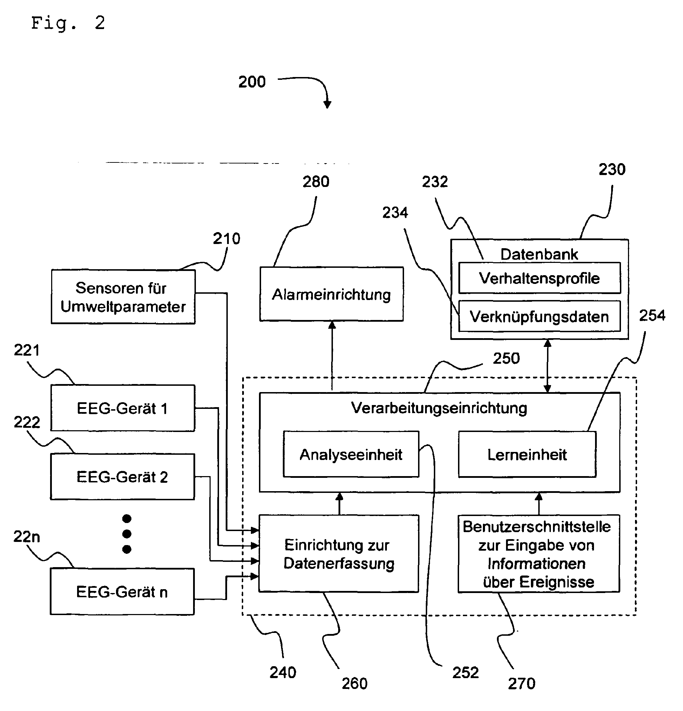

Fig. 2 zeigt eine bevorzugte Ausführungsform eines erfindungsgemäßen Systems zur Vorhersage von Ereignissen, welches zur Ausführung des in Zusammenhang mit Fig. 1 beschriebenen Verfahrens ausgebildet ist. Das System 200 umfasst eine Vielzahl von EEG-Geräten 221 bis 22n, wobei jedes eine mobile drahtlose Messkomponente umfasst, das jeweils am Kopf eines Tieres befestigt ist und zur Aufzeichnung von Gehirnwellen Spannungswerte an einer Mehrzahl von Messpunkten misst. Die Messpunkte sind typischerweise an vorgegebenen Punkten der Kopfhaut angeordnet. Zur Erhöhung der Ortsauflösung können die Messpunkte jedoch mittels implantierter Sensoren auch direkt im Gehirn angeordnet sein.

Das System umfasst ferner ein Computersystem 240 mit einer Verarbeitungseinrichtung 250, einer Einrichtung zur Datenerfassung 260 sowie einer Benuterzschnittstelle 270. Die Verarbeitungseinheit 250 ist zum maschinellen Lernen ausgebildet und weist zu diesem Zweck eine Analyseeinheit 252 und eine Lerneinheit 254 auf, wobei die Analyseeinheit 252 dazu dient, von der Einrichtung zur Datenerfassung 260 bereitgestellte Daten zu analysieren und Eingabeparameter zu erzeugen, auf deren Basis das maschinelle Lernen mittels der Lerneinheit 254 erfolgt. Zur Datenerfassung sind die EEG-Geräte 221 bis 22n sowie die Sensoren zum Ermitteln vorgegebener Umweltparameter 210 mit der Einrichtung zur Datenerfassung 260 verbunden. Mit den EEG-Geräten 221 bis 22n werden Gehirnwellenmuster gemessen. Die Analyse der gemessenen Gehirnwellen durch die Analyseeinheit 252 kann beispielsweise eine Prüfung umfassen, ob und welche einer Anzahl vorgegebener Gehirnwellenmuster vorhanden sind. Es können aber auch beliebige andere Eigenschaften der gemessenen Gehirnwellen registriert und als Eingabeparameter weiterverarbeitet werden. Die Verarbeitungseinrichtung 250 ist dazu ausgebildet, mittels maschinellen Lernens in einer ersten Lernphase individuelle Verhaltensprofile zu erzeugen, welche das normale Verhalten des jeweiligen Tieres repräsentiert. Die Verhaltensprofile werden in einem ersten Speicherbereich 232 einer Datenbank 230 gespeichert. Zu diesem Zweck ist das Computersystem 240 beispielsweise über ein Netzwerk mit der Datenbank 230 verbunden.

Basierend auf den gespeicherten Verhaltensprofilen kann die Verarbeitungseinrichtung 250 Eingabeparameter erkennen, die einem anormalen Verhaltensmuster entsprechen. Von einem Benutzer werden über die Benutzerschnittstelle 270 Informationen über Ereignisse eingegeben, die in einem zeitlichen Zusammenhang mit erkannten anormalen Verhaltensmustern stehen, wie beispielsweise ein Erdbeben, welches Stunden oder Tage nach Erkennen des anormalen Verhaltensmusters eintritt. Die erkannten anormalen Verhaltensmuster werden in einer zweiten Lernphase in Abhängigkeit vorgegebener Randbedingungen mit Informationen über Ereignisse verknüpft und entsprechende Verknüpfungsdaten in einem zweiten Speicherbereich 234 der Datenbank 230 gespeichert. Durch die Randbedingungen kann beispielsweise definiert sein, dass ein anormales Verhaltensmuster nur mit einem Ereignis verknüpft wird, wenn dieses innerhalb einer maximalen Zeitdauer nach Erkennen des anormalen Verhaltensmusters eintritt. Zweckmäßigerweise werden Informationen über erkannte anormale Verhaltensmuster zwischengespeichert, da diese vorzugsweise mit später eintretenden Ereignissen verknüpft werden, um eine Vorhersage zukünftiger Ereignisse zu ermöglichen. Nach Abschluss der ersten und zweiten Lernphase ist die Verarbeitungseinheit 250 in der Lage, in Abhängigkeit der gespeicherten individuellen Verhaltensprofile und der Verknüpfungsdaten bei Erkennen eines anormalen Verhaltensmusters ein damit verknüpftes Ereignis vorherzusagen. Das System kann vorteilhaft so konfiguriert werden, dass es bei Vorhersage eines bestimmten Ereignisses mittels einer mit dem Computersystem 240 verbundenen Alarmeinrichtung 280 einen Alarm auslöst.

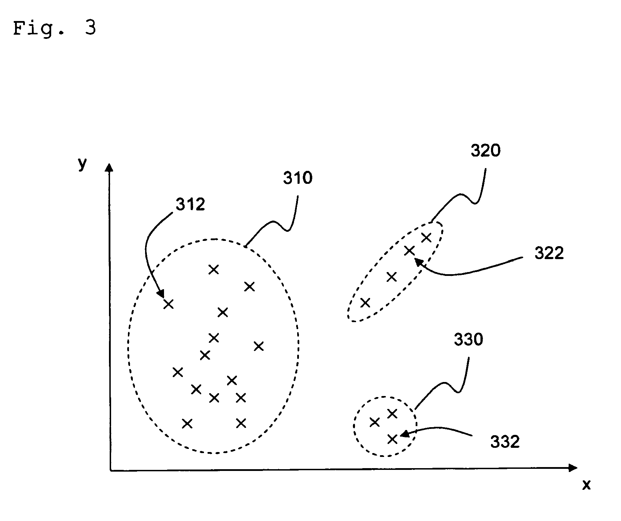

Das bei dem erfindungsgemäßen Verfahren eingesetzte maschinelle Lernen kann beispielsweise ein künstliches neuronales Netz verwenden, wobei nach Abschluss der ersten Lernphase das künstliche neuronale Netz derart angepasst ist, dass aus multidimensionalen Eingabevektoren, welche die jeweiligen Eingabeparameter umfassen, durch das künstliche neuronale Netz zugehörige Ausgabevektoren erzeugt werden, wobei die Ausgabevektoren nur wenige Dimensionen aufweisen. Fig. 3 zeigt beispielhaft in willkürlichen Einheiten die Werte solcher Ausgangsvektoren, wobei diese im dargestellten Beispiel zwei Dimensionen umfassen und exemplarisch mit den Bezugszeichen 312, 322 und 332 gekennzeichnet sind. Bei normalem Verhalten liegen die Ausgangsvektoren 312 im Bereich 310 des zweidimensionalen Vektorraums, das entsprechende Verhaltensprofil ist somit durch den Bereich 310 definiert. Die Ausgabevektoren 322 und 332 liegen außerhalb des Bereiches 310 und kennzeichnen somit anormale Verhaltensmuster. Im dargestellten Beispiel sind die im Bereich 320 liegenden Ausgabevektoren mit einer ersten Art von Ereignis verknüpft und die im Bereich 330 liegenden Ausgabevektoren mit einer zweiten Art von Ereignis, wobei entsprechende Verknüpfungsdaten gespeichert sind. Ist das mit den Ausgabevektoren im Bereich 320 verknüpfte Ereignis beispielsweise jeweils ein Erdbeben, welches innerhalb von zwei Tagen aufgetreten ist, nachdem das jeweilige anormale Verhaltensmuster erkannt wurde, so wird bei erneutem Erkennen eines anormalen Verhaltensmusters, welches einem Ausgabevektor des künstlichen neuronalen Netzes entspricht, der im Bereich 320 liegt, ein Erdbeben innerhalb der folgenden zwei Tage vorhergesagt.

## Patentansprüche

1. Verfahren zur Vorhersage von Erdbeben mittels maschinellen Lernens, umfassend
- eine erste Lernphase mit den Schritten:
a1) Erfassen von ersten Eingabeparametern (115), umfassend erste Verhaltensparameter wenigstens eines Tieres,
a2) Erstellen eines Verhaltensprofils (125), welches ein normales verhalten des wenigstens einen Tieres repräsentiert, in Abhängigkeit der erfassten ersten Eingabeparameter,
- eine zweite Lernphase mit den Schritten:
b1) Erfassen von zweiten Eingabeparametern (115), umfassend zweite Verhaltensparameter des wenigstens einen Tieres,
b2) Erkennen eines anormalen verhaltensmusters (130) in Abhängigkeit der erfassten zweiten Eingabeparameter und des erstellten Verhaltensprofils,
b3) Erfassen von Informationen über ein Erdbeben (140), wobei die Informationen den zeitlichen Abstand zwischen dem Erfassungszeitpunkt der zweiten Eingabeparameter und dem Zeitpunkt, zu dem das Erdbeben eintritt, umfassen,
b4) Verknüpfen des erkannten anormalen Verhaltensmusters mit den erfassten Informationen (145),
- eine Vorhersagephase mit den Schritten:
c1) Erfassen von dritten Eingabeparametern (115), umfassend dritte Verhaltensparameter des wenigstens einen Tieres,
c2) Erkennen eines anormalen Verhaltensmusters (130) in Abhängigkeit der erfassten dritten Eingabeparameter und des erstellten Verhaltensprofils,
c3) Ermitteln, ob das erkannte anormale Verhaltensmuster mit einem Erdbeben verknüpft ist, und
c4) Vorhersage des Erdbebens (150) in Abhängigkeit des erfassten zeitlichen Abstands zwischen dem erkannten anormalen Verhaltensmuster und dem verknüpften Erdbeben,
**dadurch gekennzeichnet, dass**
das Erfassen der ersten, zweiten und/oder dritten Eingabeparameter das Erfassen von Gehirnaktivitäten (105) des wenigstens einen Tieres umfasst.

2. Verfahren nach Anspruch 1, wobei die Schritte a1) und a2) der ersten Lernphase und/oder die Schritte b1), b2), b3) und b4) der zweiten Lernphase wiederholt ausgeführt werden.

3. Verfahren nach Anspruch 1 oder 2, wobei das Erfassen der ersten, zweiten und/oder dritten Eingabeparameter das Erfassen von Umweltparametern (110) umfasst.

4. Verfahren nach einem der vorstehenden Ansprüche, wobei zum maschinellen Lernen
- ein Entscheidungsbaum,
- ein künstliches neuronale Netz,
- eine Support Vector Machine,
- ein Bayes'sches Netz,
- ein naiver Bayes-Klassifikator,
- ein Random Forest,
- ein verstärkter Entscheidungsbaum, und/oder
- ein verstärkter naiver Bayes-Klassifikator eingesetzt werden.

5. System (200) zur Vorhersage von Erdbeben, ausgebildet zur Ausführung eines Verfahrens nach einem der Ansprüche 1 bis 5, umfassend:
- wenigstens eine erste Messeinrichtung (221-22n) zur Messung von Verhaltensparametern eines der jeweiligen ersten Messeinrichtung (221-22n) zugeordneten Tieres,
- eine erste, mit der wenigstens einen ersten Messeinrichtung (221-22n) verbundenen Erfassungseinrichtung (260) zum Erfassen von Eingabeparametern, wobei die Eingabeparameter gemessene Verhaltensparameter wenigstens eines Tieres umfassen,
- eine zweite Erfassungseinrichtung (270) zum Erfassen von Informationen über Erdbeben, wobei die Informationen den zeitlichen Abstand zwischen dem Erfassungszeitpunkt erfasster Eingabeparameter und dem Zeitpunkt, zu dem das jeweilige Erdbeben eintritt, umfassen,
- eine Verarbeitungseinrichtung (250), welche dazu ausgebildet ist, aus erfassten Eingabeparametern und Informationen über Ereignisse mittels maschinellen Lernens
- in einer ersten Lernphase für jedes Tier ein individuelles Verhaltensprofil zu ermitteln, welches ein normales Verhalten des jeweiligen Tieres repräsentiert,
- in einer zweiten Lernphase anormale Verhaltensmuster zu erkennen und mit erfassten Informationen über Ereignisse zu verknüpfen, und
- in einer Vorhersagephase anormale verhaltensmuster zu erkennen und damit verknüpfte Erdbeben vorherzusagen,
- einen ersten Speicher (232) zum Speichern der individuellen Verhaltensprofile,
- einen zweiten Speicher (234) zum Speichern von Verknüpfungsdaten, durch welche anormale Verhaltensmuster mit Informationen über Ereignisse verknüpft sind,
**dadurch gekennzeichnet, dass**
die wenigstens eine Messeinrichtung (221-22n) zum Aufnehmen eines EEG des der Messeinrichtung zugeordneten Tieres ausgebildet ist.

6. System nach Anspruch 5, wobei die wenigstens eine Messeinrichtung (221-22n) zur drahtlosen Kommunikation mit der ersten Erfassungseinrichtung (260) ausgebildet ist.

7. System nach einem der Ansprüche 5 oder 6, ferner umfassend eine Einrichtung (210) zum Ermitteln von Umweltparametern, welche mit der ersten Erfassungseinrichtung (260) verbunden ist.

8. System nach einem der Ansprüche 5 bis 7, ferner umfassend eine Alarmeinrichtung (280), wobei die Verarbeitungseinrichtung (240) dazu ausgebildet ist, bei Vorhersage eines Erdbebens mittels der Alarmeinrichtung (280) das Auslösen eines Alarms zu bewirken.

## Claims

1. A method for predicting earthquakes by machine learning, comprising:
- a first learning phase, comprising the steps of:
a1) detecting (115) first input parameters including first behavioral parameters of at least one animal;
a2) generating (125) a behavioral profile that represents a normal behavior of the at least one animal as a function of the recorded first input parameters;
- a second learning phase, comprising the steps of:
b1) detecting (115) second input parameters including second behavioral parameters of the at least one animal;
b2) identifying (130) an abnormal behavior pattern based on the acquired second input parameters and of the generated behavioral profile;
b3) detecting (140) information about an earthquake, said information comprising the time interval between the detecting time of the second input parameters and the time at which the earthquake occurs;
b4) associating (145) the identified abnormal behavior pattern with the detected information;
- a prediction phase, comprising the steps of:
c1) detecting (115) third input parameters including third behavioral parameters of the at least one animal;
c2) identifying (130) an abnormal behavior pattern based on the detected third input parameters and of the generated behavioral profile;
c3) determining whether the identified abnormal behavior is associated with an earthquake; and
c4) predicting (150) the earthquake as a function of the detected time interval between the identified abnormal behavior pattern and the associated earthquake;
**characterized in that**
the detecting of the first, second, and/or third input parameters comprises detecting brain activities (105) of the at least one animal.

2. The method as claimed in claim 1, wherein steps a1) and a2) of the first learning phase and/or steps b1), b2), b3), and b4) of the second learning phase are performed repeatedly.

3. The method as claimed in claim 1 or 2, wherein the detecting of the first, second, and/or third input parameters comprises detecting environmental parameters (110).

4. The method as claimed in any of the preceding claims, wherein
- a decision tree,
- an artificial neural network,
- a support vector machine,
- a Bayesian network,
- a naive Bayes classifier,
- a random forest,
- an enhanced decision tree, and/or
- an enhanced naive Bayes classifier
are used for machine learning.

5. A system (200) for predicting earthquakes, adapted to perform a method according to any of claims 1 to 5, comprising:
- at least one first measuring means (221-22n) for measuring behavioral parameters of an animal associated with each one of said first measurement means (221-22n);
- a first detection means (260) connected to the at least one first measuring means (221-22n) for detecting input parameters, said input parameters including measured behavioral parameters of at least one animal;
- a second detection means (270) for detecting information about earthquakes, said information including the time interval between the detection time of detected input parameters and the time at which the respective earthquake occurs;
- a processing means (250) which is adapted for performing the following from detected input parameters and information about events using machine learning:
- in a first learning phase, to determine an individual behavioral profile for each animal, which behavioral profile represents a normal behavior of the respective animal;
- in a second learning phase, to identify abnormal behavior patterns and to associate it with detected information about events; and
- in a prediction phase, to identify abnormal behavior patterns and to predict earthquakes associated therewith;
- a first memory (232) for storing the individual behavioral profiles;
- a second memory (234) for storing association data associating abnormal behavior patterns with information about events;
**characterized in that**
the at least one measuring means (221-22n) is adapted to record an EEG of the animal associated with the measuring means.

6. The system as claimed in claim 5, wherein the at least one measuring means (221 - 22n) is adapted for wireless communication with said first detection means (260).

7. The system as claimed in any of claims 5 or 6, further comprising a means (210) for detecting environmental parameters, which is connected to the first detection means (260).

8. The system as claimed in any of claims 5 to 7, further comprising an alarm means (280), said processing means (240) being adapted to cause triggering of an alarm by the alarm means (280) when an earthquake is predicted.

## Revendications

1. Procédé de prédiction de séismes au moyen d'un apprentissage mécanique, comprenant
- une première phase d'apprentissage comportant les étapes suivantes :
a1) saisie de premiers paramètres d'entrée (115), comprenant des premiers paramètres de comportement d'au moins un animal,
a2) établissement d'un profil de comportement (125) qui représente un comportement normal du au moins un animal, en fonction des premiers paramètres d'entrée saisis,
- une deuxième phase d'apprentissage comportant les étapes suivantes :
b1) saisie de deuxièmes paramètres d'entrée (115), comprenant des seconds paramètres de comportement du au moins un animal,
b2) détection d'un modèle de comportement anormal (130) en fonction des deuxièmes paramètres d'entrée saisis et du profil de comportement établi,
b3) saisie d'informations sur un séisme (140), les informations comprenant l'intervalle temporel entre le moment de la saisie des deuxièmes paramètres d'entrée et le moment de survenue du séisme,
b4) croisement du modèle de comportement anormal détecté avec les informations (145) saisies,
- une phase de prédiction comportant les étapes suivantes :
c1) saisie de troisièmes paramètres d'entrée (115), comprenant des troisièmes paramètres de comportement du au moins un animal,
c2) détection d'un modèle de comportement anormal (130) en fonction des troisièmes paramètres d'entrée saisis et du profil de comportement établi,
c3) détermination si le modèle de comportement anormal détecté est croisé avec un séisme, et
c4) prédiction du séisme (150) en fonction de l'intervalle temporel saisi entre le modèle de comportement anormal détecté et le séisme croisé,
**caractérisé en ce que**
la saisie des premiers, deuxièmes et/ou troisièmes paramètres d'entrée comprend la saisie d'activités cérébrales (105) du au moins un animal.

2. Procédé selon la revendication 1, où les étapes a1) et a2) de la première phase d'apprentissage et/ou les étapes b1), b2), b3) et b4) de la deuxième phase d'apprentissage sont exécutées de manière répétée.

3. Procédé selon la revendication 1 ou 2, où la saisie des premiers, deuxièmes et/ou troisièmes paramètres d'entrée comprend la saisie de paramètres environnementaux (110).

4. Procédé selon l'une des revendications précédentes, où pour l'apprentissage mécanique il est recouru à
- un arbre de décision,
- un réseau neuronal artificiel,
- une machine à vecteurs de support,
- un réseau bayésien,
- un classificateur bayésien naïf,
- une forêt aléatoire,
- un arbre de décision renforcé, et/ou
- un classificateur bayésien naïf renforcé.

5. Système (200) pour la prédiction de séismes, réalisé pour exécuter un procédé selon l'une des revendications 1 à 4, comprenant :
- au moins un premier dispositif de mesure (221-22n) destiné à mesurer des paramètres de comportement d'un animal associé à un respectif des premiers dispositifs de mesure (221-22n),
- un premier dispositif de saisie (260) relié au au moins un premier dispositif de mesure (221-22n), pour la saisie de paramètres d'entrée, lesdits paramètres d'entrée comprenant des paramètres de comportement mesurés d'au moins un animal,
- un deuxième dispositif de saisie (270) pour la saisie d'informations sur des séismes, les informations comprenant l'intervalle temporel entre le moment de la saisie des paramètres d'entrée saisis et le moment de survenue du séisme correspondant,
- un dispositif de traitement (250) réalisé pour déterminer par apprentissage mécanique, à partir de paramètres d'entrée saisis et d'informations sur des séismes,
- lors d'une première phase d'apprentissage, un profil de comportement individuel pour chaque animal, lequel représente un comportement normal de l'animal correspondant,
- pour détecter lors d'une deuxième phase d'apprentissage des modèles de comportement anormaux et croiser ceux-ci avec des informations saisies sur les séismes, et
- pour détecter lors d'une phase de prédiction, des modèles de comportement anormaux et prédire des séismes croisés avec ceux-ci,
- une première mémoire (232) pour la mémorisation des profils de comportement individuels,
- une deuxième mémoire (234) pour la mémorisation de données de croisement par lesquelles des modèles de comportement anormaux sont croisés avec des informations sur des séismes,
**caractérisé en ce que**
le au moins un dispositif de mesure (221-22n) est réalisé pour l'enregistrement d'un électroencéphalogramme de l'animal associé au dispositif de mesure.

6. Système selon la revendication 5, où le au moins un dispositif de mesure (221-22n) est réalisé pour la communication sans fil avec le premier dispositif de saisie (260).

7. Système selon l'une des revendications 5 et 6, comprenant en outre un dispositif (210) pour la détermination de paramètres environnementaux, lequel est relié au premier dispositif de saisie (260).

8. Système selon l'une des revendications 5 à 7, comprenant en outre un dispositif d'alarme (280), le dispositif de traitement (240) étant réalisé pour provoquer le déclenchement d'une alarme au moyen du dispositif d'alarme (280) en cas de prédiction d'un séisme.
